# EUROPÄISCHE PATENTANMELDUNG

(11) **EP 2 461 068 A2**
(43) Veröffentlichungstag der Anmeldung: **06.06.2012**
(21) Anmeldenummer: 11450120.8
(22) Anmeldetag: 15.09.2011
(51) Int. Cl.: F16G 3/00, F16G 3/10

(54) **Förderband für eine Bandförderanlage und Verfahren zu dessen Herstellung**

(30) Priorität: 01.12.2010 AT 19972010
(71) Anmelder: Innova Patent GmbH, 6960 Wolfurt (AT)
(72) Erfinder: Trieb, Herbert, 6911 Lochau (AT)
(74) Vertreter: Hehenberger, Reinhard

(57) **Zusammenfassung**

Förderband für eine Bandförderanlage, welches aus Gummi oder einem gummiartigen Kunststoff hergestellt ist und welches durch sich in Längsrichtung des Förderbandes (1) erstreckende und zumindest angenähert parallel zueinander verlaufende Stahlseile (2) verstärkt ist, wobei das Förderband (1) aus miteinander durch Vulkanisation verbundenen Abschnitten (11, 12) besteht. Dabei sind die in den aufeinander folgenden Abschnitten (11, 12) befindlichen, einander fortsetzenden Stahlseile (4) zumindest in der Mehrzahl miteinander verspleisst. (FIG.2)

## Beschreibung

Die gegenständliche Erfindung betrifft ein Förderband für eine Bandförderanlage, welches aus Gummi oder einem gummiartigen Kunststoff hergestellt ist und welches durch sich in Längsrichtung des Förderbandes erstreckende und zumindest angenähert parallel zueinander verlaufende Stahlseile verstärkt ist, wobei das Förderband aus miteinander verbundenen Abschnitten hergestellt ist, welche durch Vulkanisation miteinander verbunden sind.
Die gegenständliche Erfindung betrifft weiters ein Verfahren zur Herstellung eines derartigen Förderbandes.

Da Bandförderanlagen beliebig große Längen aufweisen können, trifft dies auch für die in diesen befindlichen Förderbänder zu. Förderbänder können jedoch, insbesondere auch deshalb, da sie mit aus Stahlseilen bestehenden Verstärkungen ausgebildet sind, aufgrund des hohen Gewichtes nur in begrenzten Längen hergestellt und transportiert werden. Aus diesem Grund besteht das Erfordernis, die für Bandförderanlagen erforderlichen Förderbänder in Abschnitten herzustellen, diese an diejenigen Orte, an welchen die Bandförderanlagen errichtet werden, zu transportieren und dort die einzelnen Abschnitte zu in sich geschlossenen Förderbändern zu verbinden.

Die Verbindung der einzelnen Abschnitte eines Förderbandes erfolgt dadurch, dass an den einander zugewandten Enden der Abschnitte das Gummimaterial entfernt wird, wodurch die in den Enden der Abschnitte des Förderbandes befindlichen Stahlseile freigelegt werden, dass die Enden eines ersten Teiles der Stahlseile der aufeinander folgenden Abschnitte aneinander gefügt werden, wobei sie einander fortsetzen sowie aneinander stoßen, und dass die Endbereiche eines zweiten Teiles der Stahlseile nebeneinander angeordnet werden, wobei sich die Endbereiche des zweiten Teiles der Stahlseile von aufeinander folgenden Abschnitten überlappen. In der Folge wird die Verbindung der beiden aufeinander folgenden Abschnitte des Förderbandes durch Vulkanisation von Gummiplatten und Gummimaterial fertiggestellt.

Um die erforderliche dynamische Zugfestigkeit eines aus Abschnitten hergestellten Förderbandes zu gewährleisten, ist es bekannt, die Stahlseile in den Bereichen der Verbindung von zwei Abschnitten in mehrere Gruppen zu unterteilen, deren Enden sich voneinander im Abstand befinden. So werden z.B. die Stahlseile in drei Gruppen mit voneinander in Längsrichtung im Abstand befindlichen Enden unterteilt. Dabei sind die Stahlseile von zwei Grupen, welche in Längsrichtung des Förderbandes in angenähert gleichen Abständen voneinander enden, durch auf diese stoßende Stahlseile fortgesetzt und sind seitlich neben diesen Stahlseilen weitere Stahlseile vorgesehen, welche sich über die Stoßstellen hinaus erstrecken und welche durch keine anstoßenden Stahlseile fortgesetzt sind, sondern welche sich mit den Endbereichen von daneben liegenden Stahlseilen überlappen. Eine solche Verbindungsart wird als dreistufig bezeichnet. Bei einer Mehrzahl von in Längsrichtung des Förderbandes gegeneinander versetzten Stoßstellen wird eine derartige Verbindung als mehrstufig bezeichnet.

Diese bekannte Verbindung von Abschnitten eines Förderbandes entspricht jedoch deshalb nicht den Erfordernissen des Betriebes, da im Förderband aufgrund der Überlappungen von Endbereichen der Stahlseile sehr hohe Scherspannungen auftreten, welche dadurch vergrößert werden, dass in diesen Bereichen gegenüber den anderen Bereichen der Anteil der Stahlverstärkung vergrößert und der Anteil an Gummimaterial verringert ist, weswegen in diesen Bereichen die Elastizität des Förderbandes und dessen dynamische Zugfestigkeit vermindert sind. Deshalb können im Betrieb in diesen Bereichen des Förderbandes die ersten Rissbildungen und Brüche auftreten.

Aus der Seilbahntechnik ist es bekannt, aus Stahldrähten hergestellte Stahlseile miteinander durch Verspleissung zu verbinden. Dabei werden z.B. an den Enden der beiden aneinander anschließenden Seiltrume die einzelnen Litzen der Stahlseile mit unterschiedlichen Längen versehen, wobei aufeinanderfolgend die einzelnen Litzen eines der beiden Seiltrume in das andere Seiltrum anstelle einer in dessen Zentrum befindlichen Seilseele eingesetzt werden. Hierdurch werden die Litzen des ersten Seiltrumes durch die Litzen des anschließenden Seiltrumes fortgesetzt. Da aufgrund des schraubenlinienartigen Verlaufes der einzelnen Litzen durch die Belastung des Stahlseiles hohe nach innen wirkende radiale Kräfte auftreten, werden auf die sich jeweils im Zentrum des einen Seiltrumes befindlichen Enden der einzelnen Litzen so hohe radiale Druckkräfte ausgeübt, dass die aneinander liegenden Enden der beiden Seiltrume miteinander hinreichend gut verbunden sind, dass durch diese Verbindungen die durch das Stahlseil übertragenen Zugkräfte aufgenommen werden.

Bei derartigen Verspleissungen ist es erforderlich, dass die einzelnen Litzen gegeneinander in Längsrichtung des Stahlseiles geringfügige Verschiebungen ausführen können. Diese Verschiebbarkeit der einzelnen Litzen wird dadurch gefördert, dass die Seiltrume mit Schmierstoffen, insbesondere Schmierfetten, versehen werden. Aufgrund von Schmierstoffen wird weiters die Biegesteifigkeit der Stahlseile verringert und werden zudem die Stahlseile gegen Korrosion und gegen Abrieb geschützt. Demgegenüber ist es bei Förderbändern, welche aus Gummi oder gummiartigen Kunststoffmaterialien hergestellt sind, bei der Verbindung zweier aufeinander folgender Abschnitte mittels Vulkanisation erforderlich, diese vollständig frei von Schmierstoffen zu halten, da andernfalls eine den Erfordernissen entsprechende Vulkanisation nicht durchführbar ist. Aus diesem Grund ist bisher bei der Verbindung von Abschnitten von aus Gummi oder gummiartigen Materialien bestehenden Förderbändern, welche durch Stahlseile verstärkt waren, davon abgesehen worden, die Stahlseile miteinander mittels aus der Seilbahntechnik bekannten Verspleissungen zu verbinden.

Der gegenständlichen Erfindung liegt die Erkenntnis zugrunde, dass bei der Verbindung von Abschnitten von Förderbändern, welche durch Stahlseile verstärkt sind, die Stahlseile miteinander verspleisst sein können, sofern diese Verspleissung unter Vermeidung von Schmierstoffen erfolgt.

Die den bekannten Förderbändern anhaftenden, vorstehend beschriebenen Nachteile werden erfindungsgemäß dadurch vermieden, dass die in den aufeinander folgenden Abschnitten befindlichen, einander fortsetzenden Stahlseile zumindest in der Mehrzahl miteinander verspleisst sind. Vorzugsweise sind sämtliche einander fortsetzenden Stahlseile miteinander verspleisst.

Durch Verspleissungen werden einerseits die bei den bisher bekannten Förderbändern, bei welchen die aufeinander folgenden Stahlseile in den Bereichen der Verbindungen nebeneinander und einander überlappend angeordnet sind, in den dazwischen befindlichen Gummibereichen auftretende Scherspannungen weitgehend vermieden und wird andererseits vermieden, dass in den Bereichen der Verbindungen der Anteil an Stahl stark vergrößert wird, wodurch die Elastizität des Förderbandes stark vermindert ist und das Förderband in diesen Bereichen bruchanfällig ist.
Die Verspleissungen werden unter Vermeidung von Schmierstoffen vorgenommen.

Da in Förderbändern die zu deren Verstärkung vorgesehenen Stahlseile nur bei Umlenktrommeln, welche sich insbesondere in den beiden Endstationen der Förderanlagen befinden, Biegebeanspruchungen unterliegen, welche jedoch aufgrund der relativ großen Durchmesser gering sind, ist die vergrößerte Biegesteifigkeit aufgrund dessen, dass Schmierstoffe vermieden werden, nicht maßgeblich. Da weiters die Stahlseile vollständig von Gummimaterial durchdrungen und umgeben sind, besteht auch kein Erfordernis, die Stahlseile mittels Schmierstoffen gegenüber Korrosionen und mechanischem Abrieb zu schützen.

Vorzugsweise sind die Stahlseile in zwei aufeinander folgenden, miteinander verbundenen Abschnitten mittels eines Kurzspleisses oder mittels eines Langspleisses miteinander verbunden.

Gemäß einem Verfahren zur Herstellung eines Förderbandes für eine Bandförderanlage, welches aus Gummi oder einem gummiartigen Kunststoffmaterial besteht und welches mit dieses verstärkenden Stahlseilen ausgebildet ist, wobei die einzelnen Abschnitte des Förderbandes durch Vulkanisation von Gummi bzw. gummiartigem Kunststoffmaterial miteinander verbunden werden, werden erfindungsgemäß die einander entsprechenden Stahlseile der beiden aufeinander folgenden Abschnitte des Förderbandes zumindest in der Mehrzahl miteinander verspleisst. Vorzugsweise werden dabei die beiden Abschnitte des Förderbandes nach der Verspleissung von Stahlseilen auseinander bewegt, wodurch die verspleissten Stahlseile gespannt werden, wobei sie insbesondere auf deren mittlere Spannung im Betriebszustand gespannt werden, worauf die Verbindung der beiden Abschnitte miteinander durch Vulkanisation von Gummi bzw. gummiartigem Kunststoffmaterial fertiggestellt wird.

Ein erfindungsgemäßes Förderband sowie ein erfindungsgemäßes Verfahren sind nachstehend anhand eines in der Zeichnung dargestellten Ausführungsbeispieles näher erläutert. Es zeigen:
- FIG.1: ein erfindungsgemäßes Förderband, in axonometrischer schematischer Darstellung,
- FIG.2: eine Vorrichtung zur Verbindung der freien Enden von zwei Abschnitten des Förderbandes gemäß FIG.1, in axonometrischer Darstellung,
- FIG.3: einen Ausschnitt des Förderbandes gemäß FIG.2, in gegenüber dieser vergrößerter Darstellung,
- FIG.4: einen Ausschnitt des Förderbandes gemäß FIG.3, in gegenüber dieser vergrößerter Darstellung, und
- FIG. 5: zwei miteinander verspleisste Stahlseile, in axonometrischer Darstellung.

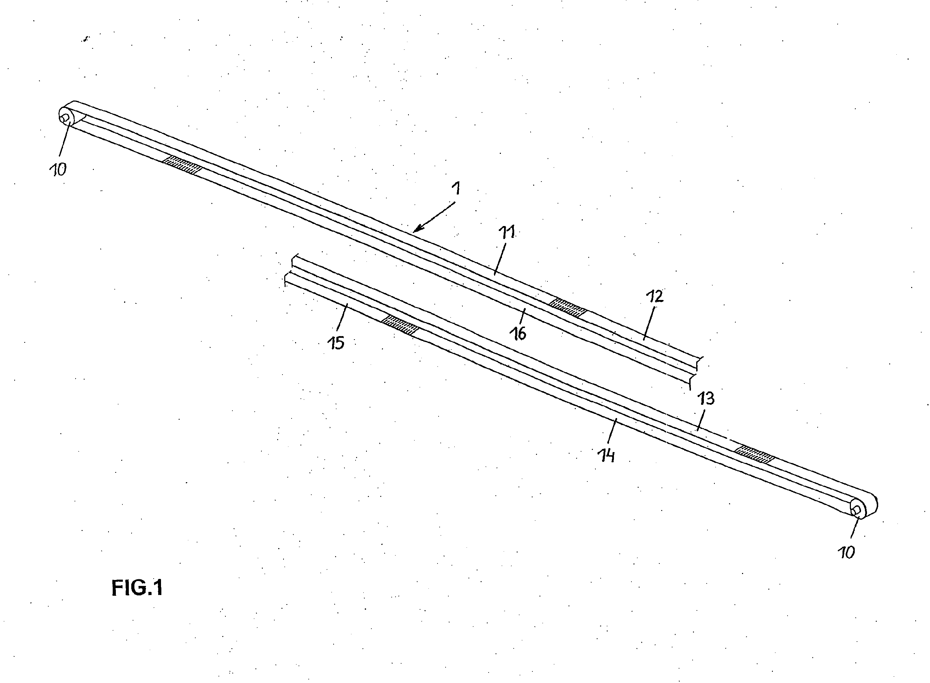

In FIG.1 ist eine Förderanlage schematisch dargestellt. Diese Förderanlage weist ein Förderband 1 auf, welches in sich geschlossen ist und welches an den Enden der Förderanlage über Umlenktrommeln 10 geführt ist. Das Förderband 1 von derartigen Förderanlagen, welche sich z.B. über 15 km bis 20 km erstrecken können, besteht aus einer Vielzahl von Abschnitten 11 bis 16, welche an ihren Enden miteinander verbunden sind. Die einzelnen Abschnitte können Längen von 200 m bis 1000 m aufweisen. Die Breite des Förderbandes 1 beträgt zwischen 0,4 m und 3,5 m. Das Förderband 1 besteht aus Gummi oder einem gummiartigen Kunststoffmaterial mit einer Dicke von etwa 2 cm bis etwa 7 cm, wobei es durch eine Vielzahl von nebeneinander angeordneten und sich in Längsrichtung des Förderbandes 1 erstreckenden Stahlseilen mit Durchmessern von z.B. 6 mm bis 30 mm verstärkt ist.

Die Stahlseile bestehen aus einer Seilseele, welche aus einer Vielzahl von Drähten besteht, und aus Seillitzen, welche gleichfalls aus einer Vielzahl von Drähten bestehen und welche eine Seilseele schraubenlinienförmig umgeben.

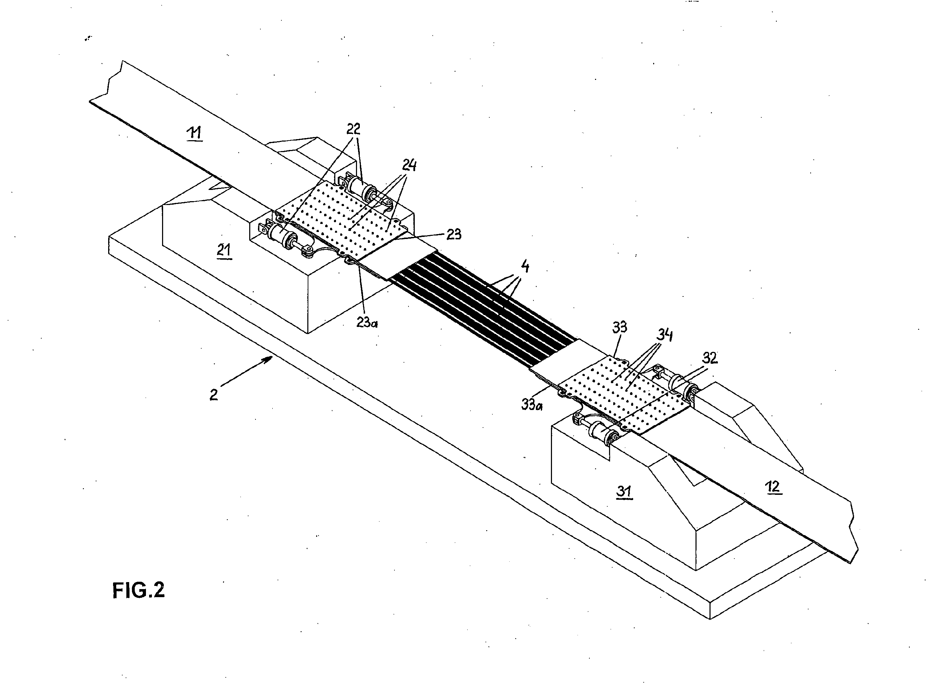

In FIG.2 ist eine Vorrichtung 2 dargestellt, welche dazu dient, zwei Abschnitte 11 und 12 eines Förderbandes 1 miteinander zu verbinden. Diese Vorrichtung 2 besteht aus einem ersten Sockel 21, an welchem sich zwei Stellzylinder 22 befinden, durch welche zwei einander zugeordnete Platten 23 und 23a in Längsrichtung des Förderbandes 1 verstellbar sind. Die beiden Platten 23 und 23a, welche unterhalb und oberhalb des freien Endes des Abschnittes 11 angeordnet sind, sind mittels einer Vielzahl von Schraubbolzen 24, welche die beiden Platten 23 und 23a und das freie Ende des Abschnittes 11 durchsetzen, miteinander verspannt. Hierdurch kann das freie Ende des Abschnittes 11 mittels der Stellzylinder 22 in Richtung des Förderbandes 1 verstellt werden.

Im Abstand vom ersten Sockel 21 befindet sich ein zweiter Sockel 31, an welchem sich zwei Stellzylinder 32 befinden, durch welche gleichfalls zwei einander zugeordnete Platten 33 und 33a in Längsrichtung des Förderbandes 1 verstellbar sind. Die beiden Platten 33 und 33a, welche ebenfalls unterhalb und oberhalb des freien Endes des Abschnittes 12 angeordnet sind, sind mittels einer Vielzahl von Schraubbolzen 34, welche die beiden Platten 33 und 33a sowie das freie Ende des Abschnittes 12 durchsetzen, miteinander verspannt. Hierdurch kann das freie Ende des Abschnittes 12 mittels der Stellzylinder 32 in Richtung des Förderbandes 1 verstellt werden.

Um die freien Enden der beiden Abschnitte 12 und 13 des Förderbandes 1 miteinander zu verbinden, werden diese mittels der Stellzylinder 22 und 32 zueinander bewegt, sodass sie einander überlappen. Hierauf werden die Enden der Stahlseile 4, welche über die Breite des Förderbandes 1 in Gruppen von z.B. drei Stahlseilen und von acht Stahlseilen angeordnet sind, durch Entfernung des diese umgebenden Gummimaterials freigelegt. In weiterer Folge werden die in den beiden Abschnitten 11 und 12 jeweils einander fortsetzenden Stahlseile 4 durch ein Spleissverfahren miteinander verbunden. Je nach den bestehenden technischen Gegebenheiten kann dabei eine Kurzspleissung, eine Langspleissung oder eine andere Spleissung erfolgen.

Maßgeblich in Bezug auf die Funktion der Stahlseile zur Verstärkung eines aus Gummi bzw. eines gummiartigen Kunststoffmaterials hergestellten Förderbandes für eine Förderanlage ist dabei, dass die Spleissung frei von jeglichen Schmierstoffen erfolgt und dass keinerlei Verunreinigungen durch fettartige Substanzen erfolgen.

Sobald sämtliche einander entsprechenden Stahlseile der beiden Abschnitte 11 und 12 verspleisst worden sind, werden die beiden Abschnitte 11 und 12 weiters dadurch verbunden, dass Gummi bzw. gummiartiges Kunststoffmaterial aufvulkanisiert wird, wobei die Stahlseile 4 vom Gummi bzw. gummiartigen Kunststoffmaterial durchdrungen und vollständig umhüllt werden. Die durch die Schraubbolzen 24 und 34 entstandenen Bohrungen werden ebenfalls durch Vulkanisation verschlossen.

Gemäß einem bevorzugten Verfahren werden vor der Vulkanisation die beiden Abschnitte 11 und 12 mittels der beiden Stellzyliner 22 und 32 auseinander bewegt, wodurch die Stahlseile 4 gestreckt werden, wobei ihnen insbesondere eine solche Spannung erteilt wird, welche der mittleren Spannung der Stahlseile 4 im Betrieb der Förderanlage entspricht. Hierdurch werden einerseits die Stahlseile 4 ausgerichtet und werden andererseits im Betrieb des Förderbandes aufgrund der Spannung der Stahlseile 4 die in dem sie umschließenden Gummimaterial auftretenden Schubspannungen, durch welche Brüche verursacht werden können, vermindert.

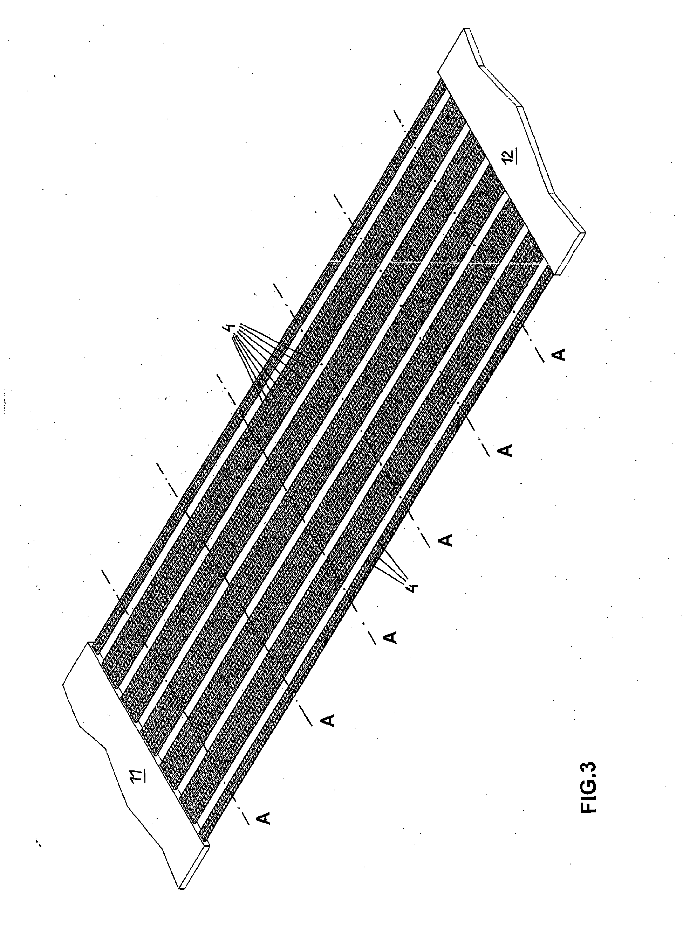

Wie dies aus FIG.3 ersichtlich ist, können die in einem Förderband 1 befindlichen Stahlseile 4 zu mehreren Gruppen zusammengefasst sein, wobei sich an den beiden Längsrändern des Förderbandes 1 jeweils eine Gruppe von drei unmittelbar nebeneinander liegenden Stahlseilen 4 und dazwischen fünf Gruppen von jeweils acht unmittelbar nebeneinander liegenden Stahlseilen 4 befinden. Sämtliche diese Stahlseile 4 bestehen aus sechs äußeren Litzen und einer inneren Stahlseele, wobei jeweils eine der Litzen der miteinander verspleissten Stahlseile 4 an das anschließende Stahlseil 4 anstößt. Durch diese sechs Stoßstellen, welche sich in den Bereichen A befinden, erfolgt die jeweilige Verspleissung der in den beiden Abschnitten 11 und 12 einander entsprechenden Stahlseile 4.

Die erfindungsgemäßen Vorteile werden auch dann erzielt, wenn die einander fortsetzenden Stahlseile 4 in der Mehrzahl miteinander verspleisst sind.

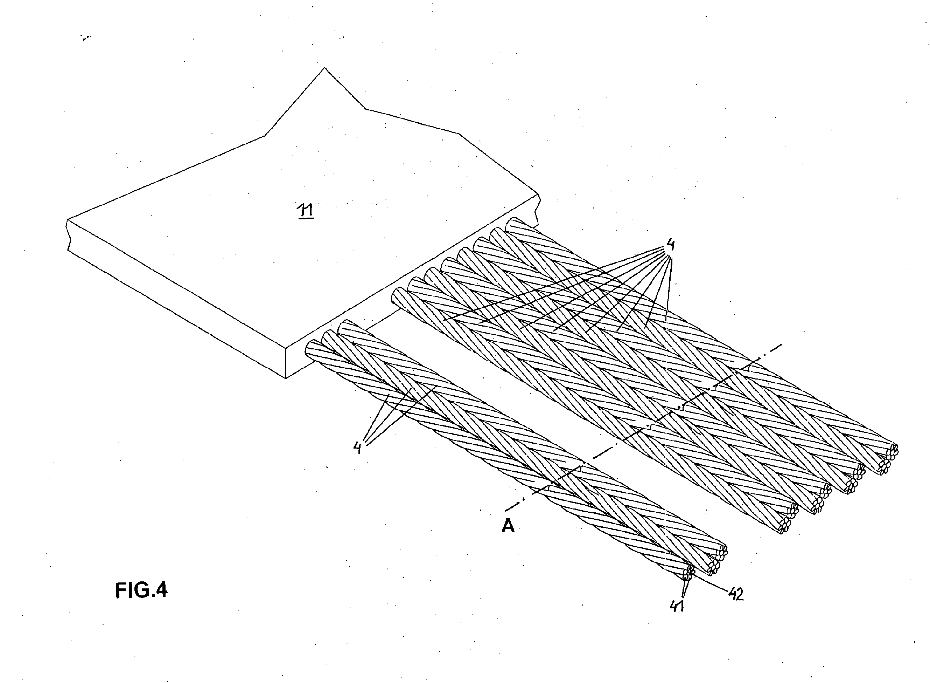

In FIG.4 sind ein Teil der Stahlseile 4, welche aus sechs äußeren Litzen 41 und einer inneren Stahlseele 42 bestehen, sowie ein Teil der Stahlseile 4 im Bereich A der Stoßstellen ersichtlich.

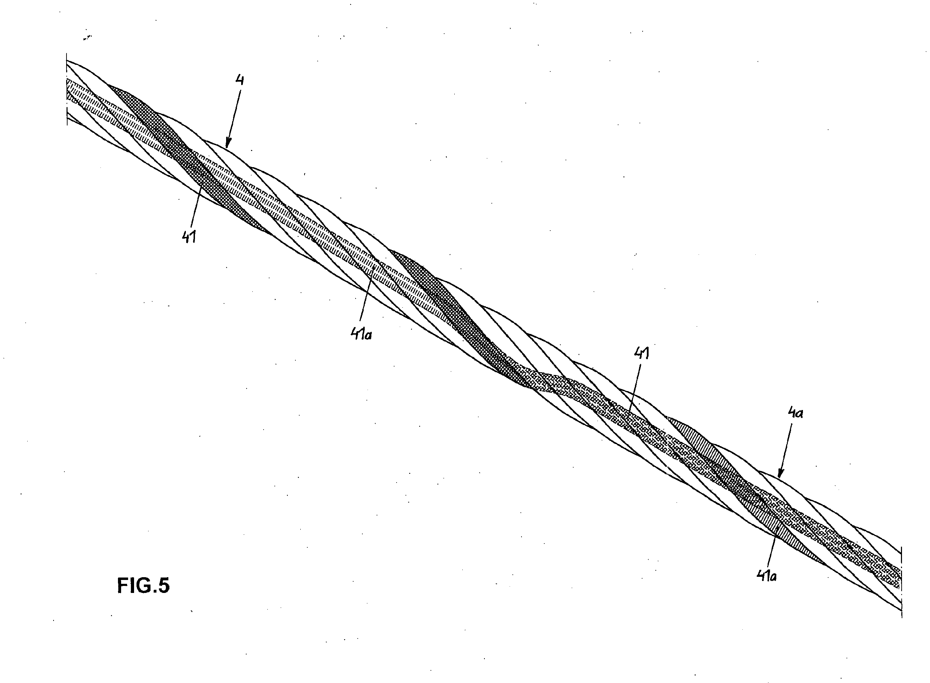

Aus FIG. 5 ist eine der Stoßstellen von zwei miteinander verspleissten Stahlseilen 4 und 4a ersichtlich, wobei das freie Ende der äußeren Litze 41 des Stahlseiles 4 im Bereich der Stoßstelle mit dem anschließenden Stahlseil 4a anstelle der inneren Seilseele in das Zentrum des Stahlseiles 4a eingesetzt ist und das freie Ende der äußeren Litze 41a anstelle der inneren Seilseele in das Zentrum des Stahlseiles 4 eingesetzt ist. In gleicher Weise werden auch die anderen Litzen der aufeinander folgenden Stahlseile 4 in voneinander im Abstand befindlichen Bereichen der Verknotung jeweils in das Zentrum des anderen Stahlseiles 4a eingesetzt.

Wie dies aus den vorstehenden Ausführungen hervorgeht und wie dies insbesondere aus FIG.4 ersichtlich ist, kann aufgrund der Verspleissungen der in Förderbändern befindlichen Stahlseile 4 in den Förderbändern gegenüber solchen, bei welchen die Stahlseile miteinander nicht verspleisst sind, eine wesentlich vergrößerte Anzahl von Stahlseilen vorgesehen werden, da aufgrund der Verspleissungen keine Überlappungen der Stahlseile erforderlich sind, weswegen für die Stahlseile mehr Platz zur Verfügung steht. Hierdurch werden durch derartige Förderbänder wesentlich vergrößerte Zugkräfte übertragen, wodurch die Leistungsfähigkeit der Förderbänder stark vergrößert wird. Insbesondere werden durch die Verspleissung der Stahlseile die in den Verbindungen zwischen zwei Abschnitten auftretenden erhöhten Scherspannungen und hierdurch bedingte Brüche vermieden.

## Patentansprüche

1. Förderband (1) für eine Bandförderanlage, welches aus Gummi oder einem gummiartigen Kunststoff hergestellt ist und welches durch sich in Längsrichtung des Förderbandes (1) erstreckende und zumindest angenähert parallel zueinander verlaufende Stahlseile (2) verstärkt ist, wobei das Förderband (1) aus miteinander durch Vulkanisation verbundenen Abschnitten (11, 12) besteht, **dadurch gekennzeichnet, dass** die in den aufeinander folgenden Abschnitten (11, 12) befindlichen, einander fortsetzenden Stahlseile (4) zumindest in der Mehrzahl miteinander verspleisst sind.

2. Förderband (1) nach Patentanspruch 1, **dadurch gekennzeichnet, dass** sämtliche einander fortsetzenden Stahlseile (4) miteinander verspleisst sind.

3. Förderband (1) nach einem der Patentansprüche 1 und 2, **dadurch gekennzeichnet, dass** die Verspleissung der Stahlseile (4) unter Vermeidung von Schmierstoffen erfolgt.

4. Förderband (1) nach einem der Patentansprüche 1 bis 3, **dadurch gekennzeichnet, dass** die Stahlseile (4) in zwei aufeinander folgenden, miteinander verbundenen Abschnitten (11, 12) mittels eines Kurzspleisses miteinander verbunden sind.

5. Förderband (1) nach einem der Patentansprüche 1 bis 3, **dadurch gekennzeichnet, dass** die Stahlseile (4) in zwei aufeinander folgenden, miteinander verbundenen Abschnitten (11, 12) mittels eines Langspleisses miteinander verbunden sind.

6. Verfahren zur Herstellung eines Förderbandes (1) für eine Bandförderanlage, welches aus Gummi oder einem gummiartigen Kunststoffmaterial besteht und welches mit dieses verstärkenden Stahlseilen (4) ausgebildet ist, wobei die einzelnen Abschnitte des Förderbandes (4) durch Vulkanisation von Gummi bzw. gummiartigem Kunststoffmaterial miteinander verbunden werden, **dadurch gekennzeichnet, dass** die einander entsprechenden Stahlseile (4) der beiden aufeinander folgenden Abschnitte (11, 12) des Förderbandes (1) zumindest in der Mehrzahl miteinander verspleisst werden, wobei vorzugsweise sämtliche einander fortsetzenden Stahlseile (4) miteinander verspleisst werden.

7. Verfahren nach Patentanspruch 65, **dadurch gekennzeichnet, dass** die beiden Abschnitte (11, 12) des Förderbandes (1) nach der Verspleissung von Stahlseilen (4) auseinander bewegt werden, wodurch die verspleissten Stahlseile (4), insbesondere auf deren mittlere Spannung im Betriebszustand, gespannt werden, worauf die Verbindung der beiden Abschnitte (11, 12) miteinander durch Vulkanisation von Gummi bzw. gummiartigem Kunststoffmaterial fertiggestellt wird.
